# EUROPEAN PATENT APPLICATION

(11) **EP 3 454 198 A1**
(43) Date of publication of application: **13.03.2019**
(21) Application number: 18193011.6
(22) Date of filing: 06.09.2018
(51) Int. Cl.: G06F 3/0488

(54) **METHOD AND APPARATUS FOR CONTROLLING APPLICATION**

(30) Priority: 07.09.2017 CN 201710801975
(71) Applicant: Beijing Xiaomi Mobile Software Co., Ltd., Beijing 100085 (CN)
(72) Inventor: LI, Lan, Beijing, Beijing 100085 (CN); LI, Jiayan, Beijing, Beijing 100085 (CN); LU, Zhenzhou, Beijing, Beijing 100085 (CN)
(74) Representative: dompatent von Kreisler Selting Werner - Partnerschaft von Patent- und Rechtsanwälten mbB

(57) **Abstract**

A method and an apparatus are provided for controlling an application in the field of computer technology. The method may include: generating (101, 201) a target control for controlling a target application when the target application is running in a background of the terminal; displaying (102) the target control in a system virtual bar, in which the system virtual bar is a bar-shape displaying region located on a screen edge; receiving (103, 205) a first signal generated according to a first designated operation performed on the target control; and controlling (104, 206) the target application according to the first signal to perform an operation corresponding to the target control in the background of the terminal.

## Description

### TECHNICAL FIELD

The present disclosure relates to a field of computer technology, and more particularly, to a method and an apparatus for controlling an application.

### BACKGROUND

A navigation bar is a bar-shape region with virtual buttons located on an edge of a terminal screen. The virtual buttons in the navigation bar may provide at least one function of returning to a previous page, returning to a home screen, and realizing multitask management.

In related arts, when a terminal displays an application, if another application running in a background is to be controlled, a user is required to click a multitask management virtual button in the navigation bar of the terminal and then to click the application to be controlled to enter a user interface of the application so as to control the application. For example, an application A is running in a foreground and an application B is running in a background of the terminal, when the user desires to use a certain function of the application B, the terminal requests for a clicking on the multitask management virtual button and then a clicking operation on the application B, to switch the application B to running in the foreground, such that the user may perform an operation on a button or a sliding block in the application B to realize a function to be used.

### SUMMARY

Examples of the present disclosure provide a method and an apparatus for controlling an application. The technical solutions will be described as follows.

According to a first aspect of the present disclosure, a method for controlling an application is provided. The method includes: generating a target control for controlling a target application when the target application is running in a background; displaying the target control in a system virtual bar, in which the system virtual bar is a bar-shape displaying region located on a screen edge; receiving a first signal generated according to a first designated operation performed on the target control; and controlling the target application according to the first signal to perform an operation corresponding to the target control.

In an embodiment, the target application is an application previously running in a foreground before a current application running in the foreground.

In an embodiment, the target control comprises at least one of following controls: a switching control and a function-operating control; the switching control is configured to control the target application to switch from running in the background to running in the foreground, and the function-operating control is configured to control the target application to perform a functional operation in the background.

In an embodiment, the method further includes: displaying an operating state of an ongoing operation in the system virtual bar when the target application is performing the ongoing operation in the background.

In an embodiment, displaying the target control in the system virtual bar includes: displaying the target control in at least one of a status bar located on a top screen edge and a navigation bar located on a bottom screen edge.

In an embodiment, when the target control is displayed in the status bar located on the top screen edge, displaying the target control in the status bar located on the top screen edge includes: displaying a function-operating control in the status bar when the target application is performing an ongoing operation in the background, in which, the status bar is configured to display an operating state of the ongoing operation, and the function-operating control is configured to control the target application to perform a functional operation in the background.

In an embodiment, when the target control is displayed in the navigation bar located on the bottom screen edge, displaying the target control in the navigation bar located on the bottom screen edge includes: displaying an integrated entrance in the navigation bar; receiving a second signal generated according to a second designated operation triggered on the integrated entrance; and displaying at least two target controls in the navigation bar according to the second signal.

In an embodiment, displaying the integrated entrance in the navigation bar includes: displaying the integrated entrance in a region of the navigation bar besides n virtual buttons, wherein the n virtual buttons comprise at least one of following buttons: a return button, a home button, and a menu button; displaying at least two target controls in the navigation bar according to the second signal includes: replacing preset virtual buttons among the n virtual buttons by the at least two target controls according to the second signal.

In an embodiment, the method further includes: displaying a navigation menu button in the navigation bar; receiving a third signal generated according to a third designated operation triggered on the navigation menu button; and changing the at least two target controls back to the preset virtual buttons according to the third signal.

According to a second aspect of the present disclosure, an apparatus for controlling an application is provided. The apparatus may include: a control generating module, configured to generate a target control for controlling a target application when the target application is running in a background; a first displaying module, configured to display the target control in a system virtual bar, in which the system virtual bar is a bar-shape displaying region located on a screen edge; a first receiving module, configured to receive a first signal generated according to a first designated operation performed on the target control; and an operation performing module, configured to control the target application according to the first signal to perform an operation corresponding to the target control.

In an embodiment, the target application is an application previously running in a foreground before a current application running in the foreground.

In an embodiment, the target control comprises at least one of following controls: a switching control and a function-operating control; the switching control is configured to control the target application to switch from running in the background to running in the foreground, and the function-operating control is configured to control the target application to perform a functional operation in the background.

In an embodiment, the apparatus further includes: a second displaying module, configured to display an operating state of an ongoing operation in the system virtual bar when the target application is performing the ongoing operation in the background.

In an embodiment, the first displaying module includes: a first displaying sub-module, configured to display the target control in a status bar located on a top screen edge; and a second displaying sub-module, configured to display the target control in a navigation bar located on a bottom screen edge.

According to a third aspect of the present disclosure, a device for controlling an application is provided. The device may include: a processor and a memory configured to store an instruction executable by the processor, in which the processor is configured to: generate a target control for controlling a target application when the target application is running in a background; display the target control in a system virtual bar, in which the system virtual bar is a bar-shape displaying region located on a screen edge; receive a first signal generated according to a first designated operation performed on the target control; and control the target application according to the first signal to perform an operation corresponding to the target control.

According to a fourth aspect of the present disclosure, a computer-readable storage medium is provided, in which at least one instruction is stored on the computer-readable storage medium, when the at least one instruction is loaded and executed by a processor, the method for controlling an application according to the first aspect and any alternative implementation of the first aspect may be performed.

It should be understood that the above general description and subsequent detailed description are merely exemplary and explanatory, rather than a limitation of the present disclosure.

### BRIEF DESCRIPTION OF THE DRAWINGS

The accompanying drawings, which are incorporated in and constitute a part of the present specification, illustrate examples consistent with the present disclosure and, together with the description, serve to explain the principles of the present disclosure.
Fig. 1A is a flow chart illustrating a method for controlling an application provided by an example of the present disclosure.
Fig. 1B is a schematic diagram illustrating an interface displaying a function-operating control in a status bar based on the example illustrated in Fig. 1A.
Fig. 1C is a schematic diagram illustrating another interface displaying a function-operating control in a status bar based on the example illustrated in Fig. 1A.
Fig. 2 is a flow chart illustrating a method for controlling an application provided by another example of the present disclosure.
Fig. 3A is a schematic diagram illustrating an interface displaying an operating state of an ongoing operation in a navigation bar based on the example illustrated in Fig. 2.
Fig. 3B is a schematic diagram illustrating an interface when an integrated entrance is displayed and triggered based on the example illustrated in Fig. 2.
Fig. 4 is a block diagram of an apparatus for controlling an application according to an example of the present disclosure.
Fig. 5 is a block diagram of an apparatus for controlling an application according to another example of the present disclosure.
Fig. 6 is a block diagram illustrating a device according to an example of the present disclosure.

### DETAILED DESCRIPTION

Descriptions will now be made in detail to exemplary examples, examples of which are illustrated in the accompanying drawings. The following description refers to the accompanying drawings in which the same numbers in different drawings represent the same or similar elements unless otherwise represented. The implementations set forth in the following description of exemplary examples do not represent all implementations consistent with the disclosure. Instead, they are merely examples of devices and methods consistent with aspects related to the disclosure as recited in the appended claims.

The term "module" herein may refer to programs or instructions able to realize some functions which are stored in a memory and performed by one or more circuit components. A term "a plurality of' mentioned herein refers to two or more than two. A term "and/or" for describing a relative relation of related objects means that there are three relations. For example, "A and/or B" may represent three situations including "single A", "both A and B" and "single B". A character "/" generally represents that there is an "or" relation between the related objects.

In examples of the present disclosure, the method for controlling an application may be applied in a terminal. The terminal may include a smart phone, a tablet computer, an e-book reader, an MP3 (Moving Picture Experts Group Audio Layer III) player, an MP4 (Moving Picture Experts Group Audio Layer IV) player, a laptop computer, a PC and the like. Alternatively or additionally, an operating system providing a system virtual bar is running in the terminal. The system virtual bar is a status bar located on a top edge of a terminal displaying screen or a navigation bar located on a bottom edge of the terminal displaying screen. The operating system includes but is not limited to the Android system or a customized system developed based on the Android system.

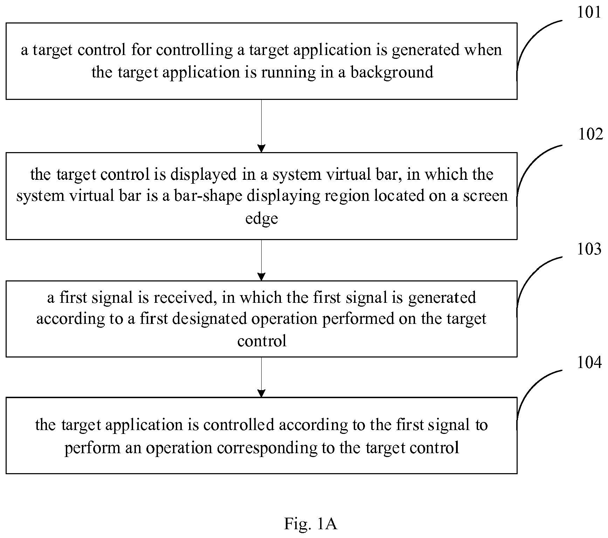

Referring to Fig. 1A, a flow chart illustrating a method for controlling an application provided by an example of the present disclosure is illustrated. The method may be applied to the above-mentioned terminal. The system virtual bar may be a navigation bar or a status bar. For the convenience of illustration, in the example illustrated in Fig. 1A, assume that the system virtual bar is the navigation bar. As shown in Fig. 1A, the method for controlling an application may include followings.

At block 101, a target control for controlling a target application is generated when the target application is running in a background of the terminal.

In examples of the present disclosure, when there is the target application running in the background, an operating system may generate the target control for controlling the target application. The target application running in the background refers to an application running in the operating system of the terminal but not running in the foreground. Alternatively or additionally, the target application may be an application previously running in the foreground before a current application running in the foreground. For example, when the application currently running in the foreground is application A, and the application previously running in the foreground before the application A is application B, in this example, the operating system of the terminal may generate the target control for controlling the application B when there is the application B.

Alternatively or additionally, the target control is able to generate a corresponding instruction under a user's operation. The instruction instructs a corresponding target application to perform a predetermined operation. The target control may be an operable component such as a button or a sliding bar and the like. For example, when the target application is a phone-call application running in the background, the target control may be the virtual button such as a hang-up button, a speakerphone button or a recording button and the like. For another example, when the target application is a music application running in the background, the target control may be the virtual button such as a playing button, a previous button or a next button.

Alternatively or additionally, the target control may also include at least one of following controls: a switching control and a function-operating control. The switching control is configured to control the target application to switch from running in the background to running in the foreground. For example, after the switching control receives a first designated operation, the application B running in the background is switched to running in the foreground, and a user interface of the application B is displayed on a screen of the terminal. Further, the function-operating control is configured to control the target application to perform a corresponding functional operation in the background. The functional operation may include the operations corresponding to active buttons/menus when the target application is running in the foreground. For example, when the target application is a phone-call application running in the background, the target control may be the virtual button such as a hang-up button, a speakerphone button, or a recording button and the like, and after the virtual button is triggered, the phone-call application may be controlled to perform a corresponding operation: hang up a current phone call, open a speaker, or start a phone-call recording.

Alternatively or additionally, the target application may be at least one of following applications: a phone-call application, a recording application, a music application, a timer application, a navigation application, a car-hailing application, a food-ordering application, a fitness application, an express shipping application, and a social application.

At block 102, the target control is displayed in a system virtual bar, in which the system virtual bar is a bar-shape displaying region located on a screen edge. The screen edge may be an edge portion of a main display of the terminal that is defined according to user settings. When the terminal includes a main display and an auxiliary display, the screen edge may be located in the auxiliary display on the edge of the terminal.

In examples of the present disclosure, the system virtual bar may be a status bar located on a top edge of a terminal displaying screen, or may be a navigation bar located on a bottom edge of the terminal displaying screen. The navigation bar is a bar-shape control provided by the operating system, the virtual buttons provided by the operating system may be displayed in this control, and different system functions may be realized when different virtual buttons are triggered. For example, the virtual buttons include a return button, a home button and a menu button. The return button is configured to realize a system function for returning to a previous page, the home button is configured to realize a function for switching to a home page, and the menu button is configured to realize a function for unfolding a menu of the application running currently.

In examples of the present disclosure, the number of the virtual buttons displayed in the navigation bar is a positive integer. Further, as a size of the terminal screen is limited, for a terminal, there is an upper limit for the number of the virtual buttons shown on the screen at the same time. For example, a control including n virtual buttons is displayed in the navigation bar of a terminal, in which n is a positive integer and a lower limit for n may be 1. As a length of a bottom boarder of the terminal is limited, an upper limit for n may be 5. The terminal may change the content of the navigation bar when the target application in the background receives a message or other notification. The terminal may change the navigation bar by displaying an operating state of an ongoing operation in the navigation bar when the target application is performing the ongoing operation in the background.

Alternatively or additionally, there may be an upper limit for a width of the navigation bar due to a limitation of a width of the screen. A height of the navigation bar may be adjustable in a certain range, such that at least two rows of controls of the virtual buttons may be displayed in the navigation bar. A specific displaying pattern of the navigation bar is not limited in this example.

Alternatively or additionally, the operating system may control the navigation bar and the user interface of the application running in the foreground currently to be displayed in parallel, such that the user may be able to view the overall user interface of the application running in the foreground currently as well as the content shown in the navigation bar at the same time. Further, the operating system may control the navigation bar to be displayed in an upper layer suspending upon the bottom of the user interface. When the navigation bar is displayed in the upper layer suspending upon the bottom of the user interface, the navigation bar may be semi-transparent. For example, when the application running in the foreground currently is the application A, and the target application is the application B, the navigation bar and the user interface of the application A may be displayed in parallel.

At block 103, a first signal is received, in which the first signal is generated according to a first designated operation performed on the target control.

The terminal may receive a first designated operation for the target control. The first designated operation may be a click operation (short-time touch), a long-time touch, a leftward sliding, a rightward sliding, an upward sliding or a downward sliding and the like.

Alternatively or additionally, for the terminal able to distinguish strength of pressed pressure, the first designated operation may also be a slight pressing or a heavy pressing and the like.

At block 104, the target application is controlled according to the first signal to perform an operation corresponding to the target control in the background of the terminal.

In examples of the present disclosure, the operating system may control the target application according to the first signal to perform the operation corresponding to the target control in the background of the terminal without brining the target application to the foreground. Alternatively or additionally, the target control may identify at least one first designated operation. For example, when the target control is the hang-up button in the phone-call application, the hang-up button may only identify a click operation and generate the first signal after the click operation is received. The operating system may perform an operation to hang up the current phone call in the phone-call application after the first signal is received. For another example, taking the hang-up button mentioned above as an example again, the hang-up button may identify more than one first designated operation such as the click operation and a long-time pressing and dragging operation, and send the first signal to the operating system after the click operation is received, such that the operating system may control the phone-call application to hang up the current phone call. After the long-time pressing and dragging operation is received, the phone-call control is moved along with the dragging operation to a position where the dragging operation ends.

In conclusion, with the method for controlling an application provided by the examples of the present disclosure, a target control for controlling a target application is generated when the target application is running in a background, the target control is displayed in a system virtual bar, in which the system virtual bar is a bar-shape displaying region located on a screen edge, a first signal is received, in which the first signal is generated according to a first designated operation performed on the target control, and the target application is controlled according to the first signal to perform an operation corresponding to the target control. The disclosure enables the operating system to display the target control of the application running in the background in the system virtual bar. Accordingly, when a user needs to perform an operation on the target application running in the background, the operating system may cause the target application to perform the operation when detecting a corresponding operation on the target control. Thus, a tedious process of launching the target application to perform related operations of the target application after exiting a current application running in a foreground may be avoided, thereby simplifying operational steps for controlling an application running in the background and improving an efficiency of operating the application running in the background.

In examples of the present disclosure, the system virtual bar may be a status bar in which a function-operating control may be displayed. When the target application is performing an ongoing operation in the background, the operating system allows the function-operating control to be displayed in the status bar.

The status bar is configured to display an operating state of the ongoing operation, and the function-operating control is configured to control the target application to perform a corresponding functional operation in the background. Alternatively or additionally, when the above function-operating control is displayed in the status bar of the terminal, icons such as indicating electric quantity of battery, signal intensity, a Bluetooth connecting state and clock identification which are displayed initially in the status bar may be hidden. Alternatively or additionally, the above icons and the function-operating control may be displayed simultaneously.

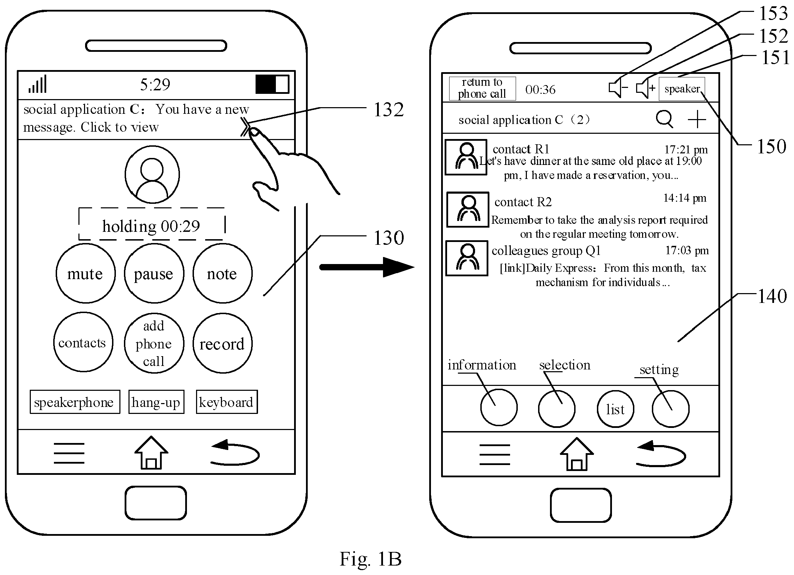

Hereinafter, Fig. 1B is taken as an example to illustrate an interface including the function-operating control in place of original icons displayed in the status bar. Referring to Fig, 1B, a schematic diagram of an interface displaying a function-operating control in a status bar based on the example illustrated in Fig. 1A is illustrated. In Fig. 1B, the user interface 130 is the user interface of the phone-call application B. When detecting that the user clicks an entrance 132 of a social application C, the operating system switches the user interface displayed on the terminal to the user interface 140 of the social application C and displays the status bar 150 in parallel to the user interface 140. The status bar 150 includes three function-operating controls including: a speakerphone button 151, a volume up button 152, and a volume down button 153. When detecting that the user clicks the speakerphone button 151, the operating system of the terminal may control the phone-call application B to switch the current phone call to a hands-free state. When detecting that the user clicks the volume up button 152, the operating system of the terminal may control the phone-call application B to turn up the volume of the current phone call. When detecting that the user clicks the volume down button 153, the operating system of the terminal may control the phone-call application B to turn down the volume of the current phone call.

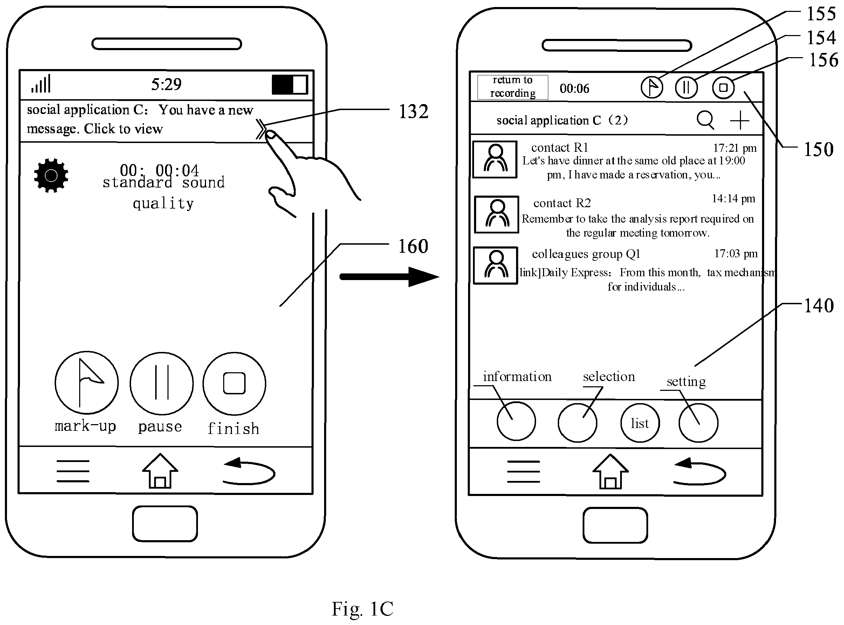

Foe another example, referring to Fig. 1C, a schematic diagram of another interface displaying a function-operating control in a status bar based on the example illustrated in Fig. 1A is illustrated. In Fig. 1C, the user interface 160 is the user interface of the recording application D. When detecting that the user clicks an entrance 132 of a social application C, the operating system switches the user interface displayed on the terminal to the user interface 140 of the social application C and displays the status bar 150 in parallel to the user interface 140. There are three function-operating controls including a pausing button 155, a mark-up button 156 and a finishing button 154 displayed in the status bar 150. When detecting that the user clicks the pausing button 155, the operating system of the terminal may control the recording application D to pause a current recording. When detecting that the user clicks the mark-up button 156, the operating system of the terminal may control the recording application D to provide a text label inputting box for the current recording. When detecting that the user clicks the finishing button 154, the operating system of the terminal may control the recording application D to stop and store the current recording.

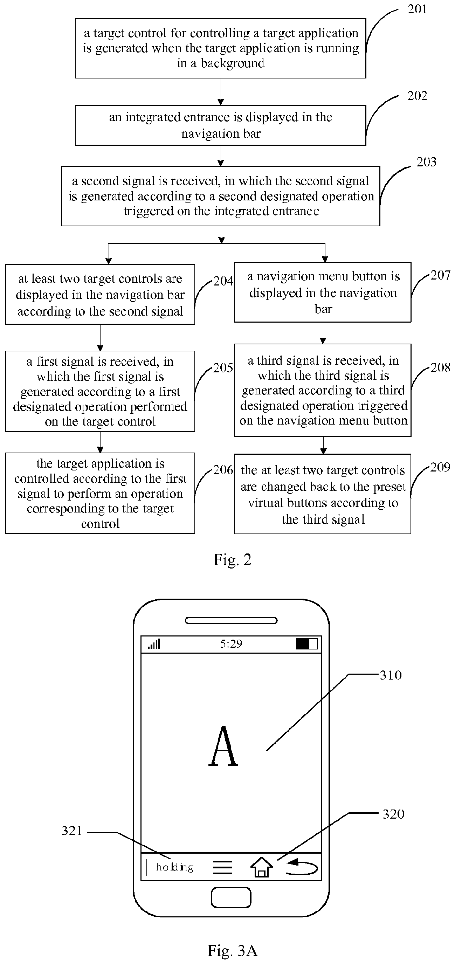

In the method for controlling an application provided by examples of the present disclosure, the system virtual bar may also be a navigation bar. The target control may be displayed simultaneously with at least one of following virtual buttons: the return button, the home button, and the menu button in the system virtual bar. Further, the virtual button displayed initially in the system virtual bar may be replaced with the target control. A solution of replacing the virtual button displayed initially in the system virtual bar by the target control will be described below with reference to Fig. 2.

Referring to Fig. 2, a flow chart illustrating a method for controlling an application provided by another example of the present disclosure is illustrated. The method may be applied to the above terminal. As shown in Fig. 2, the method for controlling an application may include followings.

At block 201, a target control for controlling a target application is generated when the target application is running in a background of the terminal.

A performing process of the act in block 201 is the same as that of the act in block 101. Regarding the detail description of the performing process of the act in block 201, reference may be made to the description of that of the act in block 101, which will not be described in detail herein.

At block 202, an integrated entrance is displayed in the navigation bar.

In examples of the preset disclosure, the integrated entrance may be configured to integrate and accommodate the target controls to be displayed in the navigation bar. The integrated entrance may be displayed as a visual icon in the navigation bar. Therefore, the integrated entrance may be displayed in icon-sized space of the navigation bar under the control of the operating system when the user needs not to use the target control.

Alternatively or additionally, when the system virtual bar is the navigation bar, the navigation bar is configured to display n virtual buttons provided by the operating system, in which n is a positive integer. The examples of the present disclosure aim at displaying the integrated entrance without affecting the displaying of the virtual buttons in the navigation bar. The operating system may control the integrated entrance to be displayed in a region of the navigation bar besides the n virtual buttons. The n virtual buttons may include at least one of following buttons: a return button, a home button, and a menu button.

Alternatively or additionally, when the number of the target controls is one, the operating system may control the target control to be displayed directly at the place where the above integrated entrance is without displaying the integrated entrance. Alternatively or additionally, when the above target control is a single control, the operating system may control the above integrated entrance to be displayed.

At block 203, a second signal is received, in which the second signal is generated according to a second designated operation triggered on the integrated entrance.

It should be noted that, after the act in block 203 is performed, acts in block 204 and block 207 may be performed simultaneously in examples of the present disclosure.

At block 204, at least two target controls are displayed in the navigation bar according to the second signal.

In examples of the present disclosure, the system virtual bar may be the navigation bar displayed on the bottom screen edge. The operating system may detect a second designated operation of the user for the integrated entrance. Similar to the first designated operation, the second designated operation may also be a short-time touch, a long-time touch, a leftward sliding, a rightward sliding, an upward sliding or a downward sliding and the like.

Alternatively or additionally, for the terminal able to distinguish strength of pressed pressure, the second designated operation may also be a slight pressing or a heavy pressing and the like.

When the above second designated operation is detected, the operating system may receive the second signal generated according to the second designated operation.

Alternatively or additionally, when the target application is performing an ongoing operation, an operating state of the ongoing operation is displayed in the navigation bar.

In examples of the present disclosure, the ongoing operation refers to performing an operation or remaining a state continuously in a time period. For example, when the ongoing operation is an operation such as a phone calling, a recording, a time-keeping or a navigating, the ongoing operation may realize maintaining of a phone-call holding state, a continuous recording state, a time-keeping state or a navigating state in a time period.

Alternatively or additionally, the operating system may read a designated attribute of the ongoing operation from attribute information of the application, so as to determine whether the target application is in an ongoing operation according to content of the designated attribute.

For example, referring to Fig. 3A, a schematic diagram illustrating an interface displaying an operating state of an ongoing operation in a navigation bar based on the example illustrated in Fig. 2 is illustrated. The user interface 310 is the user interface of the application A currently running in the foreground. The target application B is a phone-call application which is in a call state with a designated contact (i.e., an ongoing operating state). Therefore, an operating state 321 of the call state may be displayed in the navigation bar 320.

Alternatively or additionally, the operating system may control the at least two target controls to be displayed in place of preset virtual buttons among the n virtual buttons according to the second signal. When the number of the above target controls is at least two, taking the system virtual bar being the navigation bar as an example, the operating system may control the at least two target controls to be displayed in the navigation bar according to the second signal after the second signal is received, and the initially displayed virtual buttons are replaced at the same time. For example, if there are three virtual buttons including the return button, the home button and the menu button displayed in the navigation bar initially, the operating system may replace the three virtual buttons by the at least two target controls according to the second signal.

Alternatively or additionally, taking the system virtual bar being the navigation bar as an example, when the target control includes M controls, N first target controls and M-N second target controls among the M controls may be determined, in which N is a preset positive integer and M is an integer greater than N. The value of N may be determined according to a maximum number of the target controls displayed in the navigation bar at a time. For example, when five target controls can be displayed in the navigation bar at a time, the value of N is five. In a practical application, a region for displaying in the navigation bar is limited, at most N controls may be displayed at a time (e.g., at most five target controls may be displayed). When the number M of the target controls to be displayed is greater than N, it is impossible for the operating system to display all target controls in the navigation bar at a time. In this case, the operating system may determine the N target controls among the M controls as the first target controls, and determine the M-N controls as the second target controls. After that, the operating system may control the N first target controls to be displayed in the navigation bar. When a fourth designated operation performed on the navigation bar is detected, Z target controls among the N first target controls may be replaced by Z target controls among the M-N second target controls, in which Z is a positive integer and smaller than or equal to a smaller one between N and M-N.

At block 205, a first signal is received, in which the first signal is generated according to a first designated operation performed on the target control.

At block 206, the target application is controlled according to the first signal to perform an operation corresponding to the target control in the background.

Performing processes of the acts in block 205 and block 206 are the same as those of the acts in block 103 and block 104. Regarding the detail description of the performing processes of the acts in block 205 and block 206, reference may be made to the description of those of the acts in block 103 and block 104, which will not be described in detail herein.

At block 207, a navigation menu button is displayed in the navigation bar.

In examples of the present disclosure, taking the system virtual bar being the navigation bar as an example, when the n virtual buttons are replayed by the target control in the navigation bar, the operating system may control the navigation menu button to be displayed in the navigation bar. The navigation menu button is configured to re-unfold and display the virtual buttons provided by the operating system. For example, the controls displayed in the navigation bar currently are a target control a, a target control b and a target control c, in this case, the operating system may control the navigation menu button d to be displayed in the navigation bar, such that the virtual buttons including the return button, the home button and the menu button may be displayed in the navigation bar when the terminal detects that the user clicks the navigation menu button d.

Alternatively or additionally, for the convenience of operation, the navigation menu button may be located on at least one position of a leftmost side and a rightmost side of the system virtual bar.

At block 208, a third signal is received, in which the third signal is generated according to a third designated operation triggered on the navigation menu button.

The operating system may detect the third designated operation of the user for the navigation menu button. Similar to the first designated operation, the third designated operation may be a short-time touch, a long-time touch, a leftward sliding, a rightward sliding, an upward sliding or a downward sliding and the like.

Alternatively or additionally, for the terminal able to distinguish strength of pressed pressure, the third designated operation may also be a slight pressing or a heavy pressing and the like.

When the above third designated operation is detected, the operating system may receive the third signal generated according to the third designated operation.

At block 209, the at least two target controls are changed back to the preset virtual buttons according to the third signal.

In examples of the present disclosure, taking the system virtual bar being the navigation bar as an example, the operating system may control the at least two target controls to be changed back to the preset virtual buttons in the navigation bar according to the third signal. In other words, after the operating system determines that the user triggers the navigation menu button, the virtual button initially displayed in the navigation bar may be displayed, and the target control is removed from the navigation bar at the same time. Meanwhile, the operating system may control to the integrated entrance to be displayed in the navigation bar, such that the user is able to re-use the target control in the navigation bar, and a second object corresponding to the target control may be represented on the user interface.

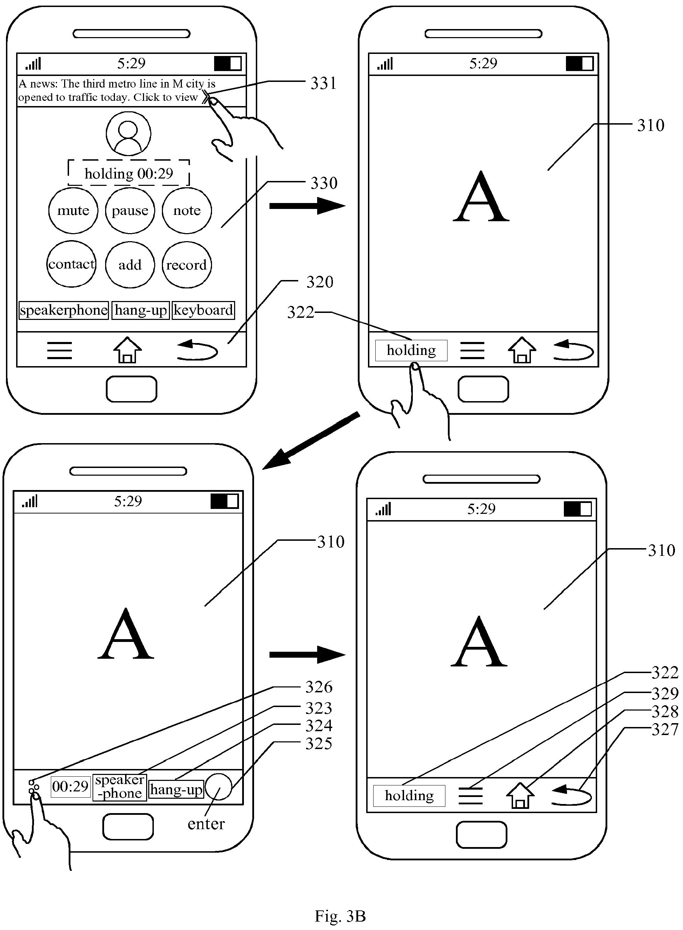

For example, in Fig. 3B, a schematic diagram illustrates an interface when an integrated entrance is displayed and triggered based on the example illustrated in Fig. 2. In Fig. 3B, the user interface of the phone-call application B is represented on the user interface 330. In a process of holding a phone call, when detecting that the user clicks a viewing button 331 of a news application A among messages popped-up on an upper side of a mobile phone, the terminal switches the user interface 330 displayed in the screen to the user interface 310 of the news application A. Meanwhile, as the operating system detects that the phone-call application B is an application in an ongoing operating state (in a call state), the integrated entrance 322 is displayed in the navigation bar 320. In order to save a displaying space of the navigation bar, the ongoing operating state of the phone-call application B may be displayed on the integrated entrance 322. When a click operation (a second operation) of the user is received on the integrated entrance 322, a speakerphone button 323, a hang-up button 324, an entering button 325, and a navigation menu button 326 may be represented in the navigation bar.

When detecting that the user clicks the speakerphone button 323 or the hang-up button 324, the operating system may directly control the phone-call application B to switch the current phone call to a hands-free state or to hang up the current phone call. When detecting that the user clicks the entering button 325, the operating system may cause the user interface (i.e., the user interface 330) of the phone-call application B to be re-displayed on the screen of the terminal. When detecting that the user clicks the navigation menu button 326, the operating system may keep the user interface 310 unchanged. The virtual buttons including the return button 327, the home button 328, the menu button 329 and the integrated entrance 322 may be re-displayed in the navigation bar 320.

In conclusion, with the method for controlling an application provided by the examples of the present disclosure, a target control for controlling a target application is generated when the target application is running in a background, the target control is displayed in a system virtual bar, a first signal is received, in which the first signal is generated according to a first designated operation performed on the target control, and the target application is controlled according to the first signal to perform an operation corresponding to the target control. In this disclosure, the target control of the application running in the background is displayed in the system virtual bar. Thus, when a user needs to perform an operation on the application running in the background, it is only required to perform an operation on the target control, such that a tedious process of launching the target application to perform related operations of the target application after exiting a current application running in a foreground may be avoided. Therefore, the disclosure reduces operational steps for controlling an application running in the background and improves the efficiency of operating the application running in the background.

Further, by displaying an operating state of an ongoing operation in the system virtual bar when the target application is performing the ongoing operation, the user may view the operating state of the target application running in the background directly from the system virtual bar, thereby improving an efficiency of acquiring the operating state of the target application running in the background by the user.

Further, by displaying an integrated entrance in the navigation bar, receiving a second signal generated according to a second designated operation triggered on the integrated entrance, and displaying at least two target controls in the navigation bar according to the second signal, the virtual button or control which is needed for the user may be always displayed in the system virtual bar, thereby improving a space using efficiency of the system virtual bar.

Further, by displaying a navigation menu button in the navigation bar, receiving a third signal generated according to a third designated operation triggered on the navigation menu button, and changing the at least two target controls back to the preset virtual buttons according to the third signal, the virtual button of the terminal may be re-displayed after a usage of the target control is completed, thereby improving an availability of a basic function of the system virtual bar.

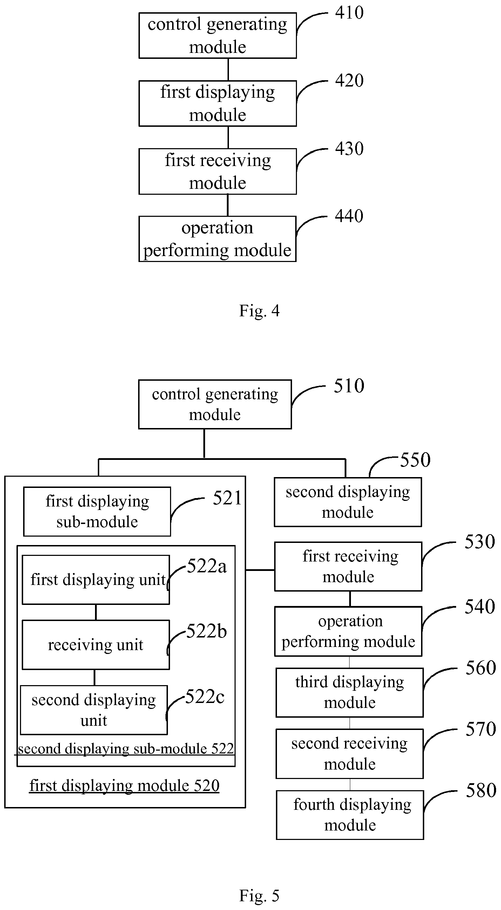

Referring to Fig. 4, a block diagram of an apparatus for controlling an application according to an example of the present disclosure is illustrated. Functions of the apparatus may be realized only by hardware, or by hardware performing corresponding software, such that acts in Fig. 1A or Fig. 2 may be realized. As shown in Fig. 4, the apparatus for controlling an application may include a control generating module 410, a first displaying module 420, a first receiving module 430, and an operation performing module 440.

The control generating module 410 is configured to generate a target control for controlling a target application when the target application is running in a background.

The first displaying module 420 is configured to display the target control in a system virtual bar, in which the system virtual bar is a bar-shape displaying region located on a screen edge.

The first receiving module 430 is configured to receive a first signal generated according to a first designated operation performed on the target control.

The operation performing module 440 is configured to control the target application according to the first signal to perform an operation corresponding to the target control.

In conclusion, with the apparatus for controlling an application provided by the examples of the present disclosure, a target control for controlling a target application is generated when the target application is running in a background, the target control is displayed in a system virtual bar, in which the system virtual bar is a bar-shape displaying region located on a screen edge, a first signal is received, in which the first signal is generated according to a first designated operation performed on the target control, and the target application is controlled according to the first signal to perform an operation corresponding to the target control. As the target control of the application running in the background is displayed in the system virtual bar in the present disclosure, when a user needs to perform an operation on the application running in the background, it is only required to perform an operation on the target control, such that a tedious process of launching the target application to perform related operations of the target application after exiting a current application running in a foreground may be avoided, thereby simplifying operational steps for controlling an application running in the background and improving an efficiency of operating the application running in the background.

Referring to Fig. 5, a block diagram of an apparatus for controlling an application according to another example of the present disclosure is illustrated. Functions of the apparatus may be realized only by hardware, or by hardware performing corresponding software, such that acts in Fig. 1A or Fig. 2 may be realized. As shown in Fig. 5, the apparatus for controlling an application may include a control generating module 510, a first displaying module 520, a first receiving module 530 and an operation performing module 540.

The control generating module 510 is configured to generate a target control for controlling a target application when the target application is running in a background.

The first displaying module 520 is configured to display the target control in a system virtual bar, in which the system virtual bar is a bar-shape displaying region located on a screen edge.

The first receiving module 530 is configured to receive a first signal generated according to a first designated operation performed on the target control.

The operation performing module 540 is configured to control the target application according to the first signal to perform an operation corresponding to the target control.

Alternatively or additionally, the target application is an application previously running in a foreground before a current application running in the foreground.

Alternatively or additionally, the target control may include at least one of a switching control and a function-operating control, in which the switching control is configured to control the target application to switch from running in the background to running in the foreground, and the function-operating control is configured to control the target application to perform a corresponding functional operation in the background.

Alternatively or additionally, the apparatus may further include: a second displaying module 550.

The second displaying module 550 is configured to display an operating state of an ongoing operation in the system virtual bar when the target application is performing the ongoing operation in the background.

Alternatively or additionally, the first displaying module 520 may include: a first displaying sub-module 521 and a second displaying sub-module 522.

The first displaying sub-module 521 is configured to display the target control in a status bar located on a top screen edge.

The second displaying sub-module 522 is configured to display the target control in a navigation bar located on a bottom screen edge.

Alternatively or additionally, the first displaying sub-module 521 is also configured to display a function-operating control in the status bar when the target application is performing an ongoing operation in the background, in which the status bar is configured to display an operating state of the ongoing operation, and the function-operating control is configured to control the target application to perform a corresponding functional operation in the background.

Alternatively or additionally, the first displaying module 520 includes: a first displaying unit 522a, a receiving unit 522b and a second displaying unit 522c.

The first displaying unit 522a is configured to display an integrated entrance in the navigation bar.

The receiving unit 522b is configured to receive a second signal generated according to a second designated operation triggered on the integrated entrance.

The second displaying unit 522c is configured to display at least two target controls in the navigation bar according to the second signal.

Alternatively or additionally, the first displaying unit 522a is configured to display the integrated entrance in a region of the navigation bar besides n virtual buttons, in which the n virtual buttons include at least one of a return button, a home button and a menu button. The second displaying unit 522c is configured to replace preset virtual buttons among the n virtual buttons by the at least two target controls according to the second signal.

Alternatively or additionally, the apparatus may further include: a third displaying module 560, a second receiving module 570 and a fourth displaying module 580.

The third displaying module 560 is configured to display a navigation menu button in the navigation bar.

The second receiving module 570 is configured to receive a third signal generated according to a third designated operation triggered on the navigation menu button.

The fourth displaying module 580 is configured to change the at least two target controls back to the preset virtual buttons according to the third signal.

In conclusion, with the apparatus for controlling an application provided by the examples of the present disclosure, a target control for controlling a target application is generated when the target application is running in a background, the target control is displayed in a system virtual bar, in which the system virtual bar is a bar-shape displaying region located on a screen edge, a first signal is received, in which the first signal is generated according to a first designated operation performed on the target control, and the target application is controlled according to the first signal to perform an operation corresponding to the target control. As the target control of the application running in the background is displayed in the system virtual bar in the present disclosure, when a user needs to perform an operation on the application running in the background, it is only required to perform an operation on the target control, such that a tedious process of launching the target application to perform related operations of the target application after exiting a current application running in a foreground may be avoided, thereby simplifying operational steps for controlling an application running in the background and improving an efficiency of operating the application running in the background.

Further, by displaying an operating state of an ongoing operation in the system virtual bar when the target application is performing the ongoing operation, the user may view the operating state of the target application running in the background directly from the system virtual bar, thereby improving an efficiency of acquiring the operating state of the target application running in the background by the user.

Further, by displaying an integrated entrance in the navigation bar, receiving a second signal generated according to a second designated operation triggered on the integrated entrance, and displaying at least two target controls in the navigation bar according to the second signal, the virtual button or control which is needed for the user may be always displayed in the system virtual bar, thereby improving a space using efficiency of the system virtual bar.

Further, by displaying a navigation menu button in the navigation bar, receiving a third signal generated according to a third designated operation triggered on the navigation menu button, and changing the at least two target controls back to the preset virtual buttons according to the third signal, the virtual button of the terminal may be re-displayed after a usage of the target control is completed, thereby improving an availability of a basic function of the system virtual bar.

An example of the present disclosure also provides a device for controlling an application to realize the method for controlling an application provided by the present disclosure. The device may include: a processor and a memory configured to store an instruction executable by the processor. The processor is configured to: generate a target control for controlling a target application when the target application is running in a background; display the target control in a system virtual bar, in which the system virtual bar is a bar-shape displaying region located on a screen edge; receive a first signal generated according to a first designated operation performed on the target control; and control the target application according to the first signal to perform an operation corresponding to the target control.

Alternatively or additionally, the target application is an application previously running in a foreground before a current application running in the foreground.

Alternatively or additionally, the target control may include at least one of a switching control and a function-operating control, in which the switching control is configured to control the target application to switch from running in the background to running in the foreground, and the function-operating control is configured to control the target application to perform a corresponding functional operation in the background.

Alternatively or additionally, the processor is further configured to display an operating state of an ongoing operation in the system virtual bar when the target application is performing the ongoing operation in the background.

Alternatively or additionally, displaying the target control in the system virtual bar may include: displaying the target control in a status bar located on a top screen edge; and/or displaying the target control in a navigation bar located on a bottom screen edge.

Alternatively or additionally, displaying the target control in the status bar located on the top screen edge may include: displaying a function-operating control in the status bar when the target application is performing an ongoing operation in the background, in which, the status bar is configured to display an operating state of the ongoing operation, and the function-operating control is configured to control the target application to perform a corresponding functional operation in the background.

Alternatively or additionally, displaying the target control in the navigation bar located on the bottom screen edge may include: displaying an integrated entrance in the navigation bar; receiving a second signal generated according to a second designated operation triggered on the integrated entrance; and displaying at least two target controls in the navigation bar according to the second signal.

Alternatively or additionally, displaying the integrated entrance in the navigation bar may include: displaying the integrated entrance in a region of the navigation bar besides n virtual buttons, in which the n virtual buttons include at least one of a return button, a home button and a menu button; and displaying at least two target controls in the navigation bar according to the second signal may include: replacing preset virtual buttons among the n virtual buttons by the at least two target controls according to the second signal.

Alternatively or additionally, the processor is further configured to display a navigation menu button in the navigation bar, to receive a third signal generated according to a third designated operation triggered on the navigation menu button, and to change the at least two target controls back to the preset virtual buttons according to the third signal.

It should be noted that, when the apparatus provided by above examples realizes functions thereof, a division of the above functional modules are merely examples. In a practical application, the above functions may be distributed to different functional modules according to practical requirements. In other words, inner structure of the apparatus may be divided into different functional modules to perform all or a part of the functions.

Regarding the apparatus in the above examples, the specific process of respective modules is described in related method examples, which will not be described herein.

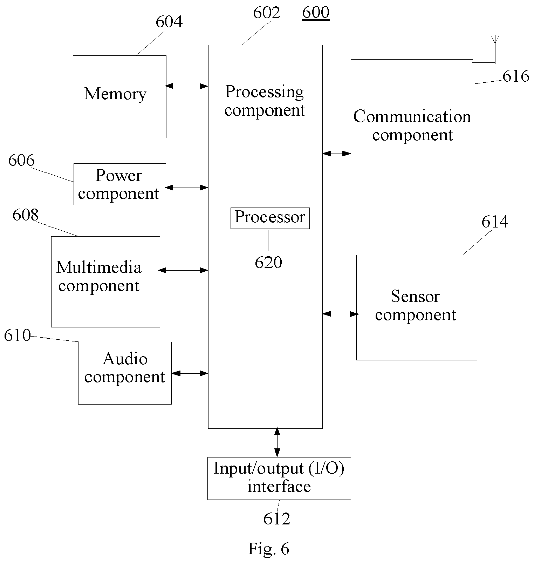

Referring to Fig. 6, a block diagram illustrating a device 600 according to an example of the present disclosure is illustrated. The device 600 may be provided as a terminal. In Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some examples, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect a temperature of the environment surrounding the device 600 and water temperature. The sensor component 614 may also detect a change in position of the device 600 or a component of the device 600, a presence or absence of user contact with the device 600, an orientation or an acceleration/deceleration of the device 600. The sensor component 614 may include a light sensor, such as a CMOS or CCD image sensor, for use in imaging applications. In some examples, the sensor component 614 may also include an accelerometer sensor, a gyroscope sensor, a magnetic sensor or a pressure sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary example, the communication component 616 receives a broadcast signal or broadcast associated information from an external broadcast management system via a broadcast channel. In one exemplary example, the communication component 616 further includes a near field communication (NFC) module to facilitate short-range communications.

In exemplary examples, the device 600 may be implemented with one or more circuit components including: application specific integrated circuits (ASICs), digital signal processors (DSPs), digital signal processing devices (DSPDs), programmable logic devices (PLDs), field programmable gate arrays (FPGAs), controllers, micro-controllers, microprocessors, an etc. Each module or sub-module in the disclosure may be implemented using one or more circuit components.

It will be understood by those skilled in the art that, all or a part of the above examples may be realized by hardware or by program instructions to corporate related hardware. The program instructions may be stored in a storage device. The storage device may contain a computer-readable storage medium. The above-mentioned storage medium may be a read-only memory, a solid state drives (SSD), a flash, a magnetic disk or an optical disk and the like. When the instructions in the computer-readable storage medium is executed by the processor 620 of the terminal, the above method for controlling an application may be performed by the terminal.

After the skilled in the art considers the description and practices the present disclosure, it is easy for the skilled in the art to acquire other implementing solutions of examples of the present disclosure. The present disclosure is aim at covering all modifications, applications or adaptive changes which abide by the general principle of the present disclosure and includes common knowledge and technical means in the art that are not disclosed herein. The description and the examples have been described are merely exemplary. The spirit and scope of the present disclosure are defined by the claims.

## Claims

1. A method for controlling an application, comprising:
generating (101, 201), by a terminal including a processor, a target control for controlling a target application when the target application is running in a background of the terminal;
displaying (102), by the terminal, the target control in a system virtual bar, wherein the system virtual bar is a bar-shape displaying region located on a screen edge;
receiving (103, 205), by the terminal, a first signal generated according to a first designated operation performed on the target control; and
controlling (104, 206), by the terminal, the target application according to the first signal to perform an operation corresponding to the target control in the background of the terminal.

2. The method according to claim 1, wherein the target application is an application previously running in a foreground before a current application running in the foreground.

3. The method according to claim 1 or 2, wherein the target control comprises at least one of following controls: a switching control and a function-operating control; and
the switching control is configured to control the target application to switch from running in the background to running in the foreground, and the function-operating control is configured to control the target application to perform a functional operation in the background.

4. The method according to any of claims 1-3, further comprising:
displaying an operating state of an ongoing operation in the system virtual bar when the target application is performing the ongoing operation in the background.

5. The method according to any of claims 1-4, wherein displaying the target control in the system virtual bar comprises:
displaying the target control in at least one of a status bar located on a top screen edge and a navigation bar located on a bottom screen edge.

6. The method according to claim 5, wherein when the target control is displayed in the status bar located on the top screen edge, displaying the target control in the status bar located on the top screen edge comprises:
displaying a function-operating control in the status bar when the target application is performing an ongoing operation in the background, in which,
the status bar is configured to display an operating state of the ongoing operation, and the function-operating control is configured to control the target application to perform a functional operation in the background.

7. The method according to claim 5, wherein when the target control is displayed in the navigation bar located on the bottom screen edge, displaying the target control in the navigation bar located on the bottom screen edge comprises:
displaying (202) an integrated entrance in the navigation bar;
receiving (203) a second signal generated according to a second designated operation triggered on the integrated entrance; and
displaying (204) at least two target controls in the navigation bar according to the second signal.

8. The method according to claim 7, wherein,
displaying (202) the integrated entrance in the navigation bar comprises: displaying the integrated entrance in a region of the navigation bar besides n virtual buttons, wherein the n virtual buttons comprise at least one of following buttons: a return button, a home button, and a menu button; and
displaying (204) at least two target controls in the navigation bar according to the second signal comprises: replacing preset virtual buttons among the n virtual buttons by the at least two target controls according to the second signal.

9. The method according to claim 8, further comprising:
displaying (207) a navigation menu button in the navigation bar;
receiving (208) a third signal generated according to a third designated operation triggered on the navigation menu button; and
changing (209) the at least two target controls back to the preset virtual buttons according to the third signal.

10. An apparatus for controlling an application, applicable in a terminal, comprising:
a control generating module (410, 510), configured to generate a target control for controlling a target application when the target application is running in a background of the terminal;
a first displaying module (420, 520), configured to display the target control in a system virtual bar, wherein the system virtual bar is a bar-shape displaying region located on a screen edge;
a first receiving module (430, 530), configured to receive a first signal generated according to a first designated operation performed on the target control; and
an operation performing module (440, 540), configured to control the target application according to the first signal to perform an operation corresponding to the target control in the background of the terminal.

11. The apparatus according to claim 10, wherein the target application is an application previously running in a foreground before a current application running in the foreground.

12. The apparatus according to claim 10 or 11, wherein the target control comprises at least one of following controls: a switching control and a function-operating control; and
the switching control is configured to control the target application to switch from running in the background to running in the foreground, and the function-operating control is configured to control the target application to perform a functional operation in the background.

13. The apparatus according to any of claims 10-12, further comprising:
a second displaying module (550), configured to display an operating state of an ongoing operation in the system virtual bar when the target application is performing the ongoing operation in the background.

14. The apparatus according to any of claims 10-13, wherein the first displaying module (420) comprises:
a first displaying sub-module (521), configured to display the target control in a status bar located on a top screen edge; and
a second displaying sub-module (522), configured to display the target control in a navigation bar located on a bottom screen edge.

15. A non-transitory computer-readable storage medium having stored therein at least one instruction that, when executed by a processor, causes the processor to perform the method for controlling an application according to any of claims 1-9.
